(19)

Europäisches Patentamt
European Patent Office
Office européen des brevets

(11) **EP 2 416 412 A1**

(12) **EUROPEAN PATENT APPLICATION**
published in accordance with Art. 153(4) EPC

(43) Date of publication:
**08.02.2012 Bulletin 2012/06**

(21) Application number: **09842623.2**

(22) Date of filing: **31.03.2009**

(51) Int Cl.:
**H01M 4/58** (2010.01)

(86) International application number:
**PCT/JP2009/056677**

(87) International publication number:
**WO 2010/113268 (07.10.2010 Gazette 2010/40)**

(84) Designated Contracting States:
**AT BE BG CH CY CZ DE DK EE ES FI FR GB GR HR HU IE IS IT LI LT LU LV MC MK MT NL NO PL PT RO SE SI SK TR**

(71) Applicant: **Mitsubishi Heavy Industries, Ltd. Tokyo 108-8215 (JP)**

(72) Inventor: **KURAHASHI, Tomoyoshi Nagasaki-shi Nagasaki 850-8610 (JP)**

(74) Representative: **Henkel, Breuer & Partner Patentanwälte Maximiliansplatz 21 80333 München (DE)**

(54) **LITHIUM ION SECONDARY BATTERY AND BATTERY SYSTEM**

(57) Provided is a lithium ion secondly battery having a positive pole (3), wherein a lithium-containing composite oxide is used as the positive pole active material, and $Li_2MnSiO_4$ differing from the positive pole active material is mixed with the positive pole active material as a lithium ion doping material, and a negative pole (2),

FIG. 1

**Description**

[Field of the Invention]

The present invention relates to a lithium ion secondary battery showing an excellent energy density and an excellent cycle characteristic, an electric motor vehicle operated by using the battery, and a power supply or storage system including the battery

[Background of the Invention]

Among the secondary batteries which are rechargeable batteries, the lithium ion secondary batteries, in particular, are used as power sources for home electronic appliances, because they have a high energy density and a high capacity. And, in recent years, the lithium ion secondary batteries have attracted considerable attention as promising power sources for electric motor vehicles, power sources for houses, and power storage batteries for preserving surplus power in power plants and the like.

As cathode active materials, multiple oxides containing lithium have been used. As the multiple oxides containing lithium, for example, a layered compound such as the lithium cobalt oxide ($LiCoO_2$) and the lithium nickel oxide ($LiNiO_2$), the spinel-type lithium manganese oxide ($LiMn_2O_4$), and the ternary compound such as $LiNi_xMn_yCo_{1-x-y}O_2$ (0=x, y=1 and 0=x + y=1) composed of nickel, cobalt, and manganese. In addition, a lithium-containing complex phosphate compound $LiM_xM'_yM''_{1-x-y}PO_4$ (0=x, y=1, and each of M, M', and M" is an element selected from the group consisting of manganese, cobalt, iron, and nickel) as one of the multiple oxides, which may be the olivine-type lithium iron phosphate ($LiFePO_4$), has been used as the cathode active materials. Hereinafter, these materials are referred to as "the existing multiple oxides."

In recent years, lithium manganese silicate ($Li_2MnSiO_4$) attracts attention as a new cathode active material (See Patent Document 1 below).
This is because two Li atoms of the lithium manganese silicate have a possibility to participate in the charging or the discharging of the secondary batteries, according to the rate equation below. Therefore, a significant improvement in capacity of a battery can be expected.

$$Li_2MnSiO_4 \leftrightarrow MnSiO_4 + 2Li^+ + 2e^-$$

[Patent Document 1] Japanese Patent Application, Laid-Open No. 2008-186807

[Disclosure of the Invention]

[Problems to be solved by the invention]

However, at present, there are some problems to use of lithium manganese silicate ($Li_2MnSiO4$) as a cathode active material. The problems are described below.

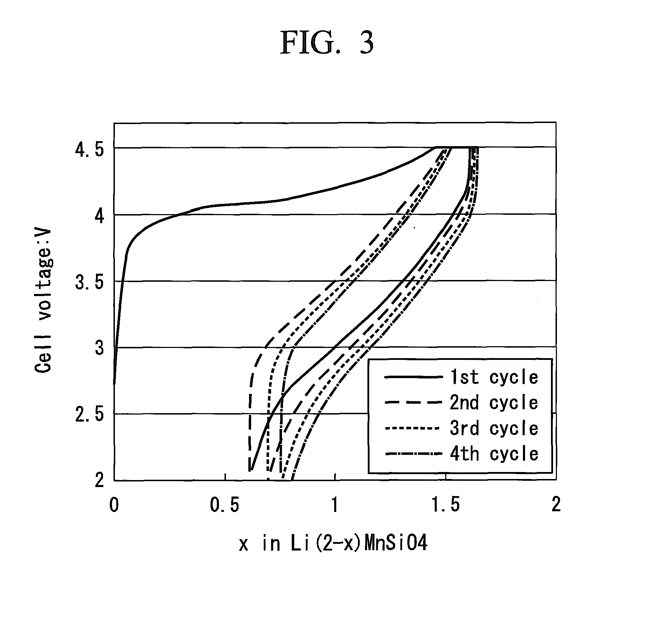

FIG. 3 is a graph showing the test result of the charging and the discharging of the lithium manganese silicate ($Li_2MnSiO_4$). At the beginning, the value of the parameter x is equal to 0.0, which means that two lithium atoms are contained in the unit cell of $Li_2MnSiO_4$. Then, 1.6 lithium atoms are released during the charging of the first cycle. The lithium atoms in the released state turn into the lithium ions. After the discharging of the first cycle, only 1.4 lithium atoms are absorbed to the unit cell, where the parameter x becomes 0.6. It means that 0.6 lithium atoms are not absorbable in the unit cell.

By repeating the charging and the discharging of the lithium manganese silicate, the number of the lithium atoms, that are absorbable to the unit cell, decreases gradually. At the end of the discharging of the fourth cycle, only 1.2 lithium atoms can be absorbed, where the parameter x is 0.8. It means that the irreversible capacity in the cycles is too large to obtain the expected capacity easily, although it is expected that two lithium atoms participate into the charging and the discharging as shown in the reaction 1 below.

$$Li_2MnSiO_4 \leftrightarrow MnSiO_4 + 2Li^+ + 2e^- \qquad \text{(Reaction 1)}$$

After the fourth cycle, it is predicted that the characteristics of the charging and the discharging become gradually similar to the characteristic that only one lithium atom participates into the charging and the discharging as shown in the reaction 2 below.

$$Li_2MnSiO_4 \leftrightarrow LiMnSiO_4 + Li^+ + e^- \qquad \text{(Reaction 2)}$$

However, since hydrofluoric acid is generally included in an electrolyte, the structure of the lithium manganese silicate, as the cathode active material, might be destroyed, because the silicic acid might be degraded by the hydrofluoric acid as time goes by. In such a situation, it might be difficult that a reaction mechanism of the Reaction 2 works.

On the other hand, as explained below, the sufficient battery performance cannot be obtained even by using the existing multiple oxides as a cathode active material, instead of the lithium manganese silicate $Li_2MnSiO_4$ having the above problems.

In general, as an anode active material, a carbon material is used. When the carbon material is used as an anode active material, in the charging at the first time, a reductive degradation reaction of a non-aqueous electrolyte occurs on the surface of the carbon material. Because of this reaction, 10 to 20 % of the lithium ions, that are released from the existing multiple oxides, are consumed by the carbon material and do not work for the charging and the discharging anymore. As a result, the amount of the lithium ions working for the charging and the discharging, specifically the amount of the lithium ions filling the site of the 4-V discharging region of the existing multiple oxides is reduced. Therefore, the sufficient capacity cannot be obtained.

The spinal-type lithium manganese oxide $LiMn_2O_4$ in particular has another site, in which lithium ions can be released and absorbed in the potential range lower than 3.6 V (the 3-V discharging region), in addition to the site of the 4-V discharging region. A dramatic improvement of energy density of the secondary battery could be expected, if lithium ions were supplied to the site of the 3-V discharging region. However, the site of the 3-V discharging region cannot be utilized efficiently, since the amount of the lithium ions to the site of the 4-V discharging region is decreased as explained above.

To increase the lithium ions, there may be a method to roll and attach a lithium metal or a lithium alloy on the anode. However, in this method, lithium dendrites are likely to be grown. In addition, the cost for manufacturing the anode increases.

The present invention is made in view of the aforementioned problems. The purpose of the present invention is to provide a lithium ion secondary battery which perform at its maximum capacities by using the existing multiple oxides but not the lithium manganese silicate $Li_2MnSiO_4$ as a cathode active material, a power supply system including the lithium ion secondary battery, or a power storage system including the lithium ion secondary battery

[Means for Solving the Problem]

To solve the above problems, a lithium ion secondary battery of the present invention has a configuration described below.

A lithium ion secondary battery of the present invention includes: a cathode including a multiple oxide containing lithium as a cathode active material and $Li_2MnSiO_4$ which is different from the cathode active material and which is mixed into the cathode active material as a doping material of lithium ions; and an anode.

A electric motor vehicle as a power supply system according to the present invention includes: a lithium ion secondary battery including a cathode made of a multiple oxide containing lithium as a cathode active material and $Li_2MnSiO_4$ which is different from the cathode active material and which is mixed into the cathode active material as a doping material of lithium ions and an anode; and a motor that drives wheels, wherein the motor is driven by electric power supplied from the lithium ion secondary battery.

The electric motor vehicle of the present invention may be a motor vehicle driven by electricity, and it can be a hybrid vehicle.

A power storage system according to the present invention includes: a lithium ion secondary battery including a cathode made of a multiple oxide containing lithium as a cathode active material and $Li_2MnSiO_4$ which is different from the cathode active material and which is mixed into the cathode active material as a doping material of lithium ions and an anode; and a power generation facility, wherein the lithium ion secondary battery stores electric power that is fed from the power generation facility.

The power generation facility of the present invention may be any facility that generates electric power such as a solar battery, a fuel battery, a windmill, a thermal power generation facility, a hydraulic power generation facility, and an atomic power generation facility, and also may be a simple electric power generator such as one provided in a motor vehicle, a bicycle, or the like. Other than power plants, a power generation facility installed in a general household may be included.

According to the lithium ion secondary battery and the battery system of the present invention, lithium manganese silicate ($Li_2MnSiO_4$), which releases about 1 lithium atom completely from its unit cell by repeating several cycles of the charging and the discharging and does not absorb the released lithium atom again, is mixed into a cathode active material as a doping material of lithium ions. By counterintuitive thinking for the above-mentioned disadvantage of the lithium manganese silicate $Li_2MnSiO_4$ as a cathode active material, for the first time in the world, it is conceived that the lithium manganese silicate $Li_2MnSiO_4$ is used as a supplying source of lithium ion but not a cathode active material.

As a doping material, the lithium manganese silicate $Li_2MnSiO_4$ of which the property is described above, is used to supply lithium ions enough to sufficiently fill the site of the 4-V discharging region of the cathode active material. As a result, a lithium secondary battery and a battery system showing excellent energy density and cycle characteristics can be obtained.

In the case that a spinel-type lithium manganese oxide is used as a cathode active material, it is also possible to supply a sufficient amount of lithium ions to the site of the 3-V discharge region. Therefore, it is possible to obtain a secondary battery with an even higher energy density.

As preferable cathode active materials, a layered compound such as lithium cobalt oxide $LiCoO_2$ and lithium nickel oxide $LiNiO_2$, a spinel-type lithium manganese oxide $LiMn_2O_4$, a ternary $LiNi_xMn_yCo_{1-x-y}O_2$ (0=x, y=1 and 0=x + y=1) including nickel, cobalt, and manganese, and, $LiM_xM'_yM''_{1-x-y}PO_4$ (0=x, y=1 and each of M, M', and M'' is an element selected from the group consisting of manganese, cobalt, iron, and nickel), and the like are examples due to their stability in electrolytes including hydrofluoric acid.

As an electrolyte, one with or without hydrofluoric acid may be included. In the case that hydrofluoric acid is included in the electrolyte, there may be a high possibility that the lithium manganese silicate $Li_2MnSiO_4$, which is added as a doping material, is decomposed. However, in this case, the materials that are stable even in the electrolyte including hydrofluoric acid are selected as a cathode active material. Therefore, it is possible to design to avoid the harmful effect on the function of the cathode active material of the lithium ion secondary battery, in addition to supply sufficient amount of lithium ions.

In the case that hydrofluoric acid is not included in the electrolyte, the lithium manganese silicate ($Li_2MnSiO_4$), which is added as a doping material, is not decomposed. As a result, the lithium manganese silicate ($Li_2MnSiO_4$) can contribute the supply of the lithium ions as a doping material as well as the charging and the discharging.

As an anode active material, a carbon material is desirable since it is easy to handle. The electrical potential decreases when lithium is absorbed in the carbon material, resulting in an increase of the potential difference between an anode and a cathode. Because of the increased potential difference, the output extracted from the battery is increased as an advantageous effect.

Blending or mixing of the lithium manganese silicate $Li_2MnSiO_4$ into the cathode active material may be performed by kneading the lithium manganese silicate $Li_2MnSiO_4$ into the cathode active material, before coating the cathode active material to the electrode. Alternatively, the lithium manganese silicate $Li_2MnSiO_4$ may be coated on the cathode active material after the cathode active material is coated on the electrode.

An assembled battery may be formed by connecting a plurality of the aforementioned secondary batteries in series or parallel.

[Effects of the Invention]

According to the present invention, the lithium manganese silicate ($Li_2MnSiO_4$) is blended or mixed as a doping material into the cathode active material. Therefore, it is possible to supply lithium ions enough to fill sufficiently the site of the 4-V discharge region or the like of the cathode active material. As a result, a lithium ion secondary battery and a power supply or storage system using the lithium ion secondary battery, that show excellent energy density and cycle characteristics, are obtained.

[Brief Description of the Drawings]

FIG. 1(a) is a diagram showing a lithium ion secondary battery according to an embodiment of the present invention.
FIG. 1(b) is a diagram showing a positional relationship among a sheet-shaped cathode, a sheet-shaped anode, and an insulating sheet of the lithium ion secondary battery according to the embodiment of the present invention.
FIG. 1(c) is a cross-sectional view of a square battery can of the lithium ion secondary battery according to the embodiment of the present invention.
FIG. 2 is a schematic diagram showing a power supply or storage system using the lithium ion secondary battery according to the embodiment of the present invention.
FIG 3 is a graph showing characteristics of the lithium manganese silicate ($Li_2MnSiO_4$) during the charging and the discharging, as an existing technique.

[Detailed Description of the Invention]

A lithium ion secondary battery according to embodiments of the present invention is explained below. The present invention is not limited to the following embodiments. Appropriate modifications can be made without departing from the spirit or scope of the present invention.

(First embodiment)

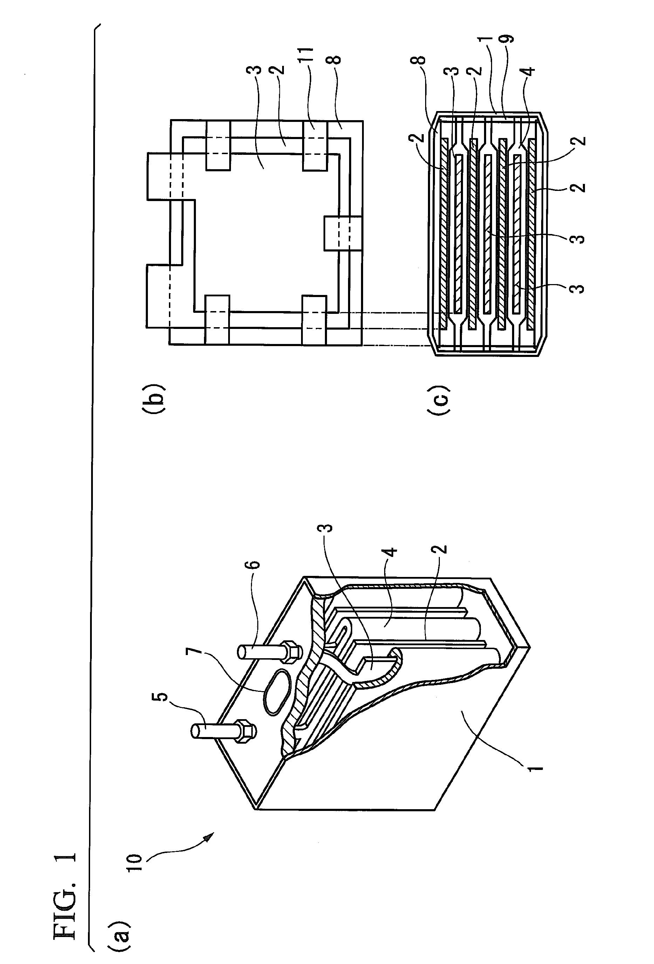

FIG. 1(a) shows a lithium ion secondary battery 10 according to the present invention, depicting the configuration of a stack-type lithium ion secondary battery. As shown in FIG. 1(a), a plurality of sheet-shaped cathodes 3 electrically connected to a positive terminal 6 and a plurality of sheet-shaped anodes 2 electrically connected to a negative terminal 5 are placed in a square battery can 1 of the lithium ion secondary battery 10, where separators 4 are interposed between each of the cathode 3 and anode 2. For safety, the square battery can 1 is provided with a rupturable vent 7 for gas venting.

FIG. 1(c) shows a cross-sectional view of the square battery can of FIG. 1(a) along a plane parallel to the surface containing the positive terminal 6 and negative terminal 5. FIG. 1(b) shows a cross-sectional view of the square battery can of FIG. 1(a) seen in the direction along with the long side of the surface containing the positive terminal 6 and negative terminal 5. In FIG. 1(b), an arrangement of the sheet-shaped cathode 3, the sheet-shaped anode 3 is shown. As shown in FIG. 1(b), each of the sheet-shaped cathode 3 and the sheet-shaped anode 2 has an electrode tab. The electrode tab of the sheet-shaped cathode 3 is electrically connected to the positive terminal 6. The electrode tab of the sheet-shaped anode 2 is electrically connected to the negative terminal 5. The sheet-shaped cathode 3 is formed smaller than the sheet-shaped anode 2. The sheet-shaped cathode 3 is placed in the bag-shaped separator 4.

The plurality of sheet-shaped cathodes 3 and sheet-shaped anodes 2 are stacked to form an electrode group. Two insulating sheets 8 are placed to sandwich the electrode group from the two opposing surfaces of the electrode group. The electrode group is pressed by the two insulating sheets 8, and then bundled by connecting the insulating sheets each other with tapes 11.

The insulating sheet 8 is made of an elastic material, and its dimension is larger than the electrode group as shown in FIG. 1(b). More specifically, the width of the insulating sheet 8 in the direction perpendicular to the direction that the electrode tab goes out, is almost identical to the width of the internal dimension along the long side of the cross-section. Because of this configuration, the insulating sheets 8 made of an elastic material fit to the round portions at the corners of the square battery can 1. Therefore, even if the square battery can is subjected to vibration or the like, it is possible to prevent the sheet-shaped electrodes of the electrode group from its bending. As a result, it is possible to prevent the failure of the secondary battery.

To make the electrical insulation between the electrode group and the square battery can 1 more securely, insulating films 9 may be arranged along the short side of the cross-section in the surface direction. The insulating film 9 is only for improving insulation. Therefore, it is not necessary for the insulating film 9 to be elastic. It is desirable that the insulating sheet 8 and the insulating film 9 are made of a plastic material, since it is easy to make their shapes.

For the anode active material of the sheet-shaped anode 2, metal oxides or the like such as natural graphite, artificial graphite, amorphous carbon, silicon compound, and $TiO_2$ may be used as a material capable of absorbing lithium ions.

For the cathode active material of the sheet-shaped cathode 3, a layered compound such as lithium cobalt oxide ($LiCoO_2$ and lithium nickel oxide ($LiNiO_2$) a spinel-type lithium manganese oxide ($LiMn_2O_4$), a ternary compound composed of nickel, cobalt, and manganese, and an olivine-type lithium iron phosphate ($LiFePO_4$) can be used. For example, those represented by the formulae below can be used.

$$LiNi_xMn_yCo_{1-X-y}O_2 \ (0=x, \ y=1 \ and \ 0=x + y=1)$$

$Li_xMn_{1-y}M_yO_4$ (0.4=X=1.2, 0=Y=0.6, and M represents one or more metal elements selected from the group consisting of Ti, V, Cr, Fe, Co, Ni, Al, Ag, Mg, and Sr)

$Li_xCo_{1-y}M_yO_4$ (0.8=X=1.2, 0=Y=0.6, and M represents one or more metal elements selected from the group consisting of Ti, V, Cr, Fe, Co, Ni, Al, Ag, Mg, and Sr)

$Li_xNi_{1-y}M_yO_4$ (0.8=X=1.2, 0=Y=0.6, and M represents one or more metal elements selected from the group consisting of Ti, V, Cr, Fe, Co, Ni, Al, Ag, Mg, and Sr)

The lithium manganese silicate ($Li_2MnSiO_4$) as a doping material of lithium ions is produced as follows. Firstly, 0.7875 mol/l of lithium acetate dihydrate and 0.375 mol/l of manganese acetate tetrahydrate are dissolved in distilled water. Then, by adding 0.125 mol/l of ethylene glycol as a condensing agent and 0.125 mol/l of citric acid as a chelating agent to the above-mentioned solution, a solution is prepared. Then, after dripping 0.375 mol/l of tetramethoxysilane, the solution is stirred for 12 hours at 80°C to hydrolyze the tetramethoxysilane and allow to be condensation-polymerized. Gel obtained by the above-mentioned procedure is dried at 80°C for 48 hours. Then, the dried gel is crashed with a planetary ball mill running at 250 rpm for 12 hours after adding 10 zirconium balls and 15 ml of acetone to the dried gel. One gram of the obtained powder is uniaxial-mold with f 13, and is then fired at 700°C for five hours in a tubular furnace while a mixed gas of argon/hydrogen (volume ratio of 9:1) is flowed at 50 ml/min. Thereby, lithium manganese silicate ($Li_2MnSiO_4$) is obtained.

The lithium manganese silicate ($Li_2MnSiO_4$) as a doping material is blended or mixed into the above-mentioned cathode active material by using a ball mill method or the like. The unit cell of the lithium manganese silicate is not broken after the mixing by the ball mill. The mixing is executed before the cathode active material is coated over the sheet-shaped electrodes. Then, the sheet-shaped cathode 3 is formed by coating the mixed or blended material to the sheet-shaped electrode.

Alternatively, the lithium manganese silicate ($Li_2MnSiO_4$) as a doping material can be coated on the cathode active material after the cathode active material is coated on the sheet-shaped electrode. Even in this method, it is regarded the lithium manganese silicate ($Li_2NinSiO_4$) as being blended or mixed into the cathode active material.

It is preferable that the amount of the lithium manganese silicate ($Li_2MnSiO_4$) as a doping material is less than 50% by weight of the cathode active material. Generally, the electrolye contains hydrofluoric acid. Therefore, this is a tradeoff between not deteriorating the characteristic of the secondary battery by existence of the cathode active material even if the lithium manganese silicate ($Li_2MnSiO_4$) was decomposed by the hydrofluoric acid, and supplying more lithium ions to the cathode active material.

For example, in the case that the spinel-type lithium manganese oxide ($LiMn_2O_4$) is used as a cathode active material and a carbon material is used as an anode active material, the calculation will be performed as follows.

When the capacity ratio of anode (negative-electrode) to cathode (positive-electrode) (N/P ratio) was set approximately 1.2, weights of the anode active material and the cathode active material would be adjusted to be about 0.97 g and about 2.32 g, respectively. Supposing that the cathode active material is capable of releasing its all of the Li as lithium ions, since 10 to 20% of the lithium ions lose their capability to participate in the charging and the discharging as mentioned above. Therefore, what is needed is to supply lithium ions from the lithium manganese silicate ($Li_2MnSiO_4$), of which quantity corresponds to the quantity of the lithium ions lost their capability.

When it is supposed that 20% of lithium ions of the cathode active material lose their capability to participate in the charging and the discharging and that the Reaction 2 is allowed to proceed for a certain period of time before the lithium manganese silicate ($Li_2MnSiO_4$) is completely decomposed, the lithium manganese silicate ($Li_2MnSiO_4$) is capable of supplying a single lithium ion per unit weight. Since the molecular weight of the lithium manganese oxide ($LiMn_2O_4$ is 180.829, and that of the lithium manganese silicate ($Li_2MnSiO_4$) is 160.916, the formula shown below is given.

$$2.32 \times (160.916/180.829) \times (20/100) \approx 0.41$$

Therefore, when 0.41 g of the lithium manganese silicate ($Li_2MnSiO_4$) is blended or mixed into the cathode active material, it is possible to compensate the lithium ions lost their capability to participate in the charging and the discharging. Thereby, the secondary battery with high energy density can be obtained.

In this case, the percentage by weight of the lithium manganese silicate ($Li_2MnSiO_4$) as a doping material in the cathode is calculated as in the formula below.

$$0.41 \times (0.41 + 2.32) \times 100 \approx 15.02 \ (\% \ by \ weight)$$

For such a ratio, the cathode active material, which is stable in a condition with hydrofluoric acid, works sufficiently for a cathode, even if the lithium manganese silicate ($Li_2MnSiO_4$) is decomposed by the hydrofluoric acid. As a result, the characteristic of the secondary battery is not deteriorated. Thus, the secondary battery obtains an excellent cycle characteristic.

Furthermore, lithium ions, the amount of which is substantially the same amount of lithium ions originated from the cathode active material lost their capability to participate in the charging and the discharging, can be supplemented from the doping material. As a result, an excessive amount of lithium ions more than needed is not formed. Thus, there is no need to concern about the formation of the lithium dendrites. Thereby, a high-performance secondary battery can be manufactured.

The electrolyte may be a general electrolyte containing hydrofluoric acid in a battery can. In the case of using an electrolyte without hydrofluoric acid, the lithium manganese silicate ($Li_2M-nSiO_4$) can works as a cathode active material which adsorbs and releases lithium ions during the charging and the discharging, in addition to the function, which is supplying lithium ions as a doping material.

The electrolyte can be prepared by dissolving an electrolyte salt in a solvent. Ethylene carbonate, propylene carbonate, butylene carbonate, γ-butyrolactone, γ-valerolactone, acetonitrile, sulfolane, 3-methylsulfolane, dimethylsulfoxide, N,N-dimethylformamide, N-methyloxazolidinone, N,N-dimethylacetamide, dimethyl carbonate, diethyl carbonate, ethyl methyl carbonate, dimethoxyethane, 1,2-dimethoxyethane, tetrahydrofuran, 2-methyltetrahydrofuran, 1,3-dioxolan, 4-methyl-1,3-dioxolan, methyl formate, methyl acetate, and methyl propionate are examples of the solvent. In addition, a mixed solvent containing two or more selected from the solvent group mentioned above can be used as the solvent. A lithium salt selected from the group consisting of $LiPF_6$, $LiBF_4$, $LiSbF_6$, $LiAsF_6$, $LiClO_4$, $LiCF_3SO_3$, $LiC_4F_9SO_3$, $LiSbF_6$, $LiAlO_4$, $LiAlCl_4$, $LiN(C_xF_{2x+1}SO_2)(CyF2_{y+1}SO_2)$ (x and y are natural numbers), LiCl, LiI, and the like are examples of the electrolyte salt. In addition, a mixture of lithium salt containing two or more selected from the lithium salt group mentioned above can be used as the electrolyte salt.

If a material containing fluorine (F) is present in the materials shown in the aforementioned examples of electrolytes, then hydrofluoric acid is contained in the electrolyte in the battery can.

In the present embodiment, the case of a stack-type electrode group in which a plurality of sheet-shaped cathodes and a plurality of sheet-shaped anodes are stacked interposed by separators has been shown. However, the present invention is applicable to any type of electrode group so long as it is a lithium ion secondary battery. Obviously, the same effect can also be obtained when, for example, a cylinder-type electrode group made of a pair of a sheet-shaped cathode and a sheet-shaped anode rolled into a swirl with a separator interposed between them is sealed in a battery can.

(Second embodiment)

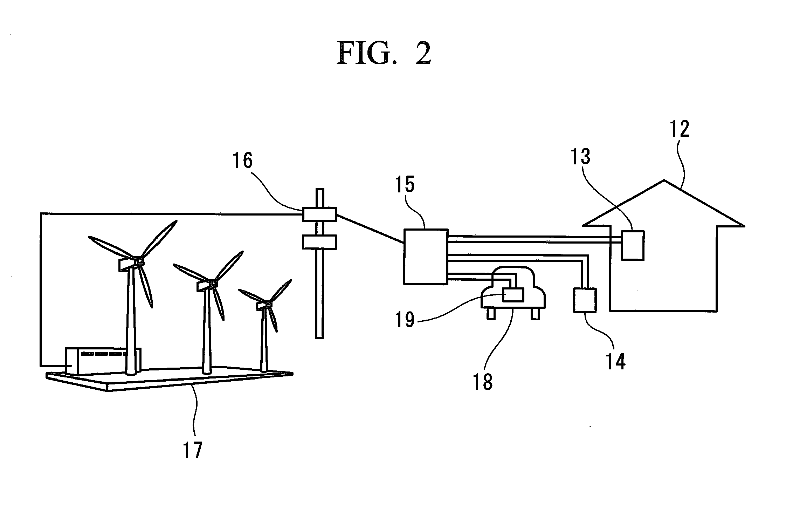

A power storage and power supply system utilizing the secondary battery mentioned above according to a second embodiment will be described with reference to FIG. 2. The present invention is not limited to the following embodiment. Appropriate modifications can be made without departing from the spirit or scope of the present invention.

The secondary battery 19 mounted on the electric motor vehicle 18, and the backup secondary battery 14 placed outside of the residential building 12, are the lithium ion secondary battery according to the present invention described in the best mode for carrying out the invention above. The lithium ion secondary battery is a stack-type lithium ion secondary battery, for example.

First, a power storage system is explained below. Electric power generated by a power generation facility 17, such as a wind power generator, a thermal power generator, a hydraulic power generator, an atomic power generator, a solar battery, and a fuel battery, is supplied via an electric power system 16 to a control box 15 used by a user. By a switching operation by the user at the control box 15, the electric power supplied from the power generation facility 17 is supplied to the secondary battery 19 that is a power source for driving the electric vehicle 18, the backup secondary battery 14, or the switch board 13. The backup secondary battery 14 and the secondary battery 19 for the electric motor vehicle 18 are charged by supplying the electric power. In the case of natural disaster or the like, where the power supply from the power generation facility 17 is stopped, the backup secondary battery 14 is used as a backup battery. Therefore, it is preferable that sufficient amount of electricity is stored in the backup secondary battery 14.

The control box may be controlled by a program so that the electric power is supplied to the switch board 13 during the daytime and to the backup secondary battery 14 or the secondary battery 19 of the electric motor vehicle 18 at night.

Next, a power supply system is explained. The backup secondary battery 14 that has been charged by the power storage system is electrically connected to the switch board 13 in the residential building 12 via the control box 15. The switch board 13 is electrically connected to electronic appliances such as an air conditioner and a television set that are connected to an outlet in the residential building 12. The user can select whether to drive the electronic appliances in the residential building 12 by receiving the electric power from the electric power system 16 or to drive the electronic appliances by utilizing the electric power in the backup secondary battery 14 that has been stored by the power storage system. The selecting and switching is performed with the control box 15.

In the case where the backup secondary battery 14 is electrically connected to the switch board 13 by the switching of the control box, electric power is supplied from the backup secondary battery 14 to the switch board 13, enabling to drive the aforementioned electronic appliances.

The electric motor vehicle 18 is able to run by supplying the electric power from the secondary battery 19, in which electric power has been charged by the power storage system, to the motor that drives the wheels. The electric motor vehicle 18 can be any motor vehicle so long as it is capable of driving its wheels by an electric motor. It can be a hybrid motor vehicle.

In a power supply and storage system utilizing the secondary battery according to the present invention, an excellent power supply and storage performance can be obtained, since the secondary battery has an excellent energy density and cycle characteristics.

[Brief Description of the Reference Symbols]

1:     square battery can (container)
2:     anode
3:     cathode

4:    separator
5:    negative terminal
6:    positive terminal
7:    safety valve
8:    insulating sheet
9:    insulating film
10:   lithium secondary battery
11:   fixation tape
12:   residential building
13:   switch board
14:   backup secondary battery
15:   control box
16:   electric power system
17:   power generation facility
18:   electric motor vehicle
19:   secondary battery

**Claims**

1.  A lithium ion secondary battery, comprising:

    a cathode including a multiple oxide containing lithium as a cathode active material and $Li_2MnSiO_4$, which is different from the cathode active material and which is mixed into the cathode active material as a doping material of lithium ions; and
    an anode.

2.  The lithium ion secondary battery according to claim 1,
    wherein the anode is made of a carbon material.

3.  The lithium ion secondary battery according to claim 2,
    wherein the multiple oxide containing lithium is a compound represented by a formula $LiM_xM'_yM''_{1-x-y}PO_4$, wherein x and y are 0 or larger, and x and y are 1 or smaller, and each of M, M', and M'' is selected from the group consisting of manganese, cobalt, iron, and nickel.

4.  The lithium ion secondary battery according to claim 2,
    wherein the multiple oxide containing lithium is a compound represented by a formula $LiNi_xMnyCo_{1-x-y}O_2$, wherein x and y are 0 or larger, and x and y are 1 or smaller, and the sum of x and y is from 0 to 1.

5.  A lithium ion secondary battery, comprising:

    a cathode including a multiple oxide containing lithium as a cathode active material and $Li_2MnSiO_4$ which is different from the cathode active material and which is mixed into the cathode active material as a doping material of lithium ions,; and
    an anode including a carbon material as an anode active material,
    wherein the doping material supplies lithium ions to compensate lithium ions that do not participate to the charging and the discharging and that are among the lithium ions derived from the cathode active material.

6.  An electric motor vehicle, comprising:

    a lithium ion secondary battery including a cathode made of a multiple oxide containing lithium as a cathode active material and $Li_2MnSiO_4$ which is different from the cathode active material and which is mixed into the cathode active material as a doping material of lithium ions and an anode; and
    a motor that drives wheels,
    wherein the motor is driven by electric power supplied from the lithium ion secondary battery.

7.  A power storage system, comprising:

a lithium ion secondary battery including a cathode made of a multiple oxide containing lithium as a cathode active material and $Li_2MnSiO_4$ which is different from the cathode active material and which is mixed into the cathode active material as a doping material of lithium ions; and

a power generation facility,

wherein the lithium ion secondary battery stores electric power supplied from the power generation facility.

FIG. 1

(a)

(b)

(c)

EP 2 416 412 A1

FIG. 2

# FIG. 3

Legend:
— 1st cycle
– – – 2nd cycle
········ 3rd cycle
–·–·– 4th cycle

x in Li(2-x)MnSiO4

| INTERNATIONAL SEARCH REPORT | International application No. |
|---|---|
| | PCT/JP2009/056677 |

A.  CLASSIFICATION OF SUBJECT MATTER
*H01M4/58*(2006.01)i

According to International Patent Classification (IPC) or to both national classification and IPC

B.  FIELDS SEARCHED

Minimum documentation searched (classification system followed by classification symbols)
H01M4/58

Documentation searched other than minimum documentation to the extent that such documents are included in the fields searched
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)
JSTPlus(JDreamII)

C.  DOCUMENTS CONSIDERED TO BE RELEVANT

| Category* | Citation of document, with indication, where appropriate, of the relevant passages | Relevant to claim No. |
|---|---|---|
| Y | JP 2008-300244 A  (Mitsui Mining & Smelting Co., Ltd.), 11 December, 2008 (11.12.08), Claims; Par. Nos. [0010] to [0017], [0021]; examples (Family: none) | 1-7 |
| Y | R.Dominko, M.Bele, M.Gaberscek, A.Meden, M.Remskar, J.Jamnik, Structure and electrochemical performance of $Li_2MnSiO_4$ and $Li_2FeSiO_4$ as potential Li-battery cathode materials, Electrochemistry Communications, 2006, 8, 217-222 | 1-7 |

| ☒ | Further documents are listed in the continuation of Box C. | ☐ | See patent family annex. |

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 26 June, 2009 (26.06.09) | 07 July, 2009 (07.07.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.

PCT/JP2009/056677

C (Continuation).   DOCUMENTS CONSIDERED TO BE RELEVANT

| Category* | Citation of document, with indication, where appropriate, of the relevant passages | Relevant to claim No. |
|---|---|---|
| Y | R.Dominko, M.Bele, A.Kokalj, M.Gaberscek, J.Jamnik, $Li_2MnSiO_4$ as a potential Li-battery cathode material, Journal of Power Sources, 174, 2007, 457-461 | 1-7 |
| Y | JP 2004-111068 A  (Sony Corp.), 08 April, 2004 (08.04.04), Par. Nos. [0005], [0006], [0016] to [0019] (Family: none) | 3 |
| A | JP 2008-218303 A  (Kyushu University), 18 September, 2008 (18.09.08), The entire specification (Family: none) | 1-7 |
| A | JP 2007-335325 A  (Kyushu University), 27 December, 2007 (27.12.07), The entire specification (Family: none) | 1-7 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008186807 A